# EUROPÄISCHE PATENTSCHRIFT

(11) **EP 2 775 605 B1**
(45) Veröffentlichungstag und Bekanntmachung des Hinweises auf die Patenterteilung: **07.02.2018**
(21) Anmeldenummer: 13157804.9
(22) Anmeldetag: 05.03.2013
(51) Int. Cl.: H02M 7/217, H02M 7/219

(54) **Verfahren zum Betrieb eines Wechselrichters und nach dem Verfahren arbeitender Wechselrichter**
Method for operating an inverter and inverter operating according to the method
Procédé destiné au fonctionnement d'un onduleur et onduleur fonctionnant selon ce procédé

(43) Veröffentlichungstag der Anmeldung: 10.09.2014
(73) Patentinhaber: Siemens Aktiengesellschaft, 80333 München (DE)
(72) Erfinder: Nieberlein, Klaus, 90471 Nürnberg (DE)

(56) Entgegenhaltungen:
- EP-A1- 2 144 360
- EP-A1- 2 525 486

## Beschreibung

Die Erfindung betrifft ein Verfahren zum Betrieb eines insbesondere dreiphasigen und jedenfalls steuerbare Halbleiterschalter umfassenden Wechselrichters. Im Weiteren betrifft die Erfindung auch ein Verfahren zum Betrieb eines derartigen, von einer Antriebssteuerungseinheit umfassten Wechselrichters. Schließlich betrifft die Erfindung auch einen nach dem Verfahren arbeitenden derartigen Wechselrichter sowie eine Antriebssteuerungseinheit mit einem nach dem Verfahren arbeitenden derartigen Wechselrichter.
Wechselrichter wie auch Antriebssteuerungseinheiten mit einem Wechselrichter sind an sich bekannt, zum Beispiel aus der EP 2 525 486 A1. Die Besonderheit der dort vorgeschlagenen Lösung besteht darin, dass zur Vermeidung von Störungen die auf der Niederspannungsseite generierten Ansteuersignale während der zwischen einzelnen Schaltpunkten der Halbleiterschalter verbleibenden Schaltpausen zur Hochspannungsseite übertragen werden. Ebenfalls bekannt sind die üblichen Verfahren zum Betrieb solcher oder ähnlicher Wechselrichter. Ein bekanntes Verfahren zum Betrieb eines Wechselrichters ist in der Fachliteratur unter dem Stichwort Raumzeigermodulation bekannt. Aus der EP 2 144 360 A1 ist ein Stromrichter bekannt, bei dem während der gleichzeitigen Aktivität zweier oberer oder unterer Halbleiterschalter Messungen durchgeführt werden, anhand derer eine Nachführung des Netzwinkels zur Taktung der Halbleiterschalter erfolgt.
Noch nicht optimal ist, dass Fehlkommutierungen und dergleichen bisher nur mit vergleichsweise hohem Aufwand vermeidbar sind.
Eine Aufgabe der Erfindung besteht darin, Fehlkommutierungen eines Wechselrichters, insbesondere Fehlkommutierungen und ein hochfrequentes Umschalten zwischen zwei Zuständen, zu vermeiden.

Diese Aufgabe wird erfindungsgemäß mit einem Verfahren zum Betrieb eines Wechselrichters, der in an sich bekannter Art und Weise steuerbare Halbleiterschalter, zum Beispiel sogenannte IGBTs, umfasst, mit den Merkmalen des Anspruchs 1 gelöst. Dazu ist bei einem Verfahren zum Betrieb eines insbesondere dreiphasigen Wechselrichters der oben genannten Art Folgendes vorgesehen:

Dem Wechselrichter werden im Betrieb in an sich bekannter Art und Weise netzseitige Eingangsspannungen, zum Beispiel über die drei Phasen eines Drehstromnetzes, zugeführt und durch Messung der an dem Wechselrichter anliegenden Eingangsspannungen wird ein jeweiliger Netzwinkel ϕ und damit auch eine Richtung eines mit dem Netzwinkel ϕ rotierenden Raumzeigers ermittelt.

In einer Datenbasis werden gemäß dem Verfahren eine Mehrzahl von netzwinkelspezifischen Steuersätzen für Leitzustände und eine Mehrzahl von netzwinkelspezifischen Steuersätzen für Übergangszustände vorgehalten. Der Begriff "netzwinkelspezifisch" meint dabei, dass der jeweilige Steuersatz für vorgegebene Netzwinkel oder vorgegebene Netzwinkelintervalle gilt. Bei einem mit dem Netzwinkel ϕ rotierenden Raumzeiger ergeben sich demnach bei einer Vollumdrehung des Raumzeigers Netzwinkel zwischen 0° und 359°. Ein netzwinkelspezifischer Steuersatz ist damit ein Steuersatz, der zum Beispiel für Netzwinkel ϕ zwischen 0° und 60° definiert wurde. Die Datenbasis umfasst eine Mehrzahl solcher netzwinkelspezifischer Steuersätze für Leitzustände. Dabei ist netzwinkelspezifisch zwischen jeweils zwei Leitzuständen ein Übergangszustand definiert. Bei einem ersten und einem zweiten Steuersatz für Leitzustände für zum Beispiel Netzwinkel ϕ zwischen 10° und 50° bzw. 70° und 110° ist netzwinkelspezifisch zwischen diesem ein Steuersatz für einen Übergangszustand vorgesehen. Der Steuersatz für den Übergangszustand gilt zum Beispiel für Netzwinkel ϕ zwischen 51° und 69°.

Die netzwinkelspezifischen Steuersätze für Leitzustände werden im Folgenden kurz als Leitzustandssteuersätze bezeichnet. Entsprechend werden die netzwinkelspezifischen Steuersätze für Übergangszustände als Übergangszustandssteuersätze bezeichnet.

Ein Leitzustand ist eine Situation, bei dem genau ein oberer Halbleiterschalter einer Halbbrücke des Wechselrichters und genau ein unterer Halbleiterschalter einer anderen Halbbrücke des Wechselrichters aktiviert, also leitend ist. Entsprechend sehen die Leitzustandssteuersätze jeweils die Aktivierung genau eines oberen Halbleiterschalters und genau eines unteren Halbleiterschalters des Wechselrichters vor.

Ein Übergangszustand ist eine Situation, bei der entweder zwei untere oder zwei obere Halbleiterschalter leitend (aktiviert, geschlossen) sind und komplementär ein oberer bzw. ein unterer Halbleiterschalter geschlossen sind. Entsprechend sehen die Übergangszustandssteuersätze jeweils die Aktivierung von genau zwei oberen oder unteren Halbleiterschaltern und die Aktivierung von genau einem unteren bzw. oberen Halbleiterschalter des Wechselrichters vor.

Die Leitzustandssteuersätze und die Übergangszustandssteuersätze definieren Sektoren, die in einer jeweiligen Umlaufrichtung des Raumzeigers alternierend aufeinander folgen. Die von den Übergangszustandssteuersätzen definierten Sektoren werden zur Unterscheidung als Kommutierungssektoren bezeichnet.

Mit dem ermittelten Netzwinkel ϕ wird gemäß dem Verfahren in der Datenbasis ein zu dem jeweiligen Netzwinkel gehöriger Leitzustands- oder Übergangszustandssteuersatz als Basis für Ansteuersignale zur Ansteuerung der Halbleiterschalter ermittelt. Bei der Datenbasis kann es sich um eine Tabelle oder dergleichen handeln. Als Datenbasis soll aber auch eine zum Beispiel in einem Steuerungsprogramm verteilte Ablage derjenigen Daten gelten, die den jeweiligen Steuersatz bestimmen. Dann ist das Steuerungsprogramm selbst die Datenbasis.

Bei einem entsprechend dem jeweiligen Netzwinkel ϕ erfolgenden Übergang von einem Leitzustandssteuersatz zu einem Übergangszustandssteuersatz erfolgt gemäß dem Verfahren unmittelbar oder in engem zeitlichen Zusammenhang eine neue Ansteuerung der Halbleiterschalter entsprechend der aufgrund des jeweiligen Übergangszustandssteuersatzes resultierenden Ansteuersignale. Der Leitzustand wird damit deaktiviert, aber es wird noch nicht kommutiert.

Während der Gültigkeit eines Übergangszustandssteuersatzes werden gemäß dem Verfahren die Eingangsspannungen des Wechselrichters überwacht. Bei Erreichen einer vorgegebenen oder vorgebbaren Bedingung in Bezug auf die überwachten Eingangsspannungen wird gemäß dem Verfahren der in der jeweiligen Umlaufrichtung des Raumzeigers nächstfolgende Leitzustandssteuersatz ausgewählt. Dann erfolgt eine neue Ansteuerung der Halbleiterschalter und eine Kommutierung entsprechend der aufgrund dieses Leitzustandssteuersatzes resultierenden Ansteuersignale für die Halbleiterschalter.

Ein ausgehend vom jeweiligen Netzwinkel ϕ in Umlaufrichtung des Raumzeigers zurückliegender Sektor, dessen zugrunde liegender Steuersatz bereits als Basis für Ansteuersignale verwendet wurde, wird dabei gemäß dem Verfahren gesperrt.

Der Wechselrichter gibt also die netzseitig anliegende elektrische Energie aufgrund der diskret aktivierbaren Leitzustandssteuersätze und der damit den Ausgangstreibern fest zugeordneten Signalzustände zur Aktivierung und Deaktivierung einzelner Halbleiterschalter als Blockstrom aus.

Bei Erreichen eines üblicherweise als Kommutierungspunkt fungierenden Netzwinkels ϕ, also bei einem grundfrequenten Betrieb bei Netzwinkeln ϕ von 60°, 120°, 180°, 240°, 300° und 360°/0°, ist bei dem hier vorgestellten Betriebsverfahren bereits ein Übergangszustandssteuersatz ausgewählt. Weil die Übergangszustandssteuersätze für Netzwinkelintervalle um die Kommutierungspunkte festgelegt sind, gelten die Übergangszustandssteuersätze bereits vor den Kommutierungspunkten. Während der gesamten Gültigkeit eines Übergangszustandssteuersatzes werden die normalerweise am Kommutierungspunkt kommutierten Phasen überwacht. Wenn dann in Bezug auf die dortigen Eingangsspannungen eine vorgegebene oder vorgebbare Bedingung eintritt, ist während des Übergangszustandes die Kommutierungsbedingung erfüllt und es wird kommutiert. Die Kommutierung erfolgt, indem aus der Datenbasis der in der jeweiligen Umlaufrichtung des Raumzeigers nächstfolgende Leitzustandssteuersatz ausgewählt wird. Entsprechend der aufgrund dieses Leitzustandssteuersatzes resultierenden Ansteuersignale erfolgt eine neue Ansteuerung der Halbleiterschalter des Wechselrichters. Im Ergebnis erfolgt damit eine Kommutierung auf die neue Phase.

Bei dem Wechselrichter handelt es sich zum Beispiel um einen von einer Antriebssteuerungseinheit umfassten Wechselrichter. Des Weiteren handelt es sich bei dem Wechselrichter zum Beispiel um einen rückspeisefähigen Wechselrichter, insbesondere einen rückspeisefähigen Wechselrichter mit einem sogenannten schlanken Zwischenkreis.

Ein Vorteil der Erfindung besteht darin, dass mit einer begrenzten Anzahl von Steuersätzen - den Leitzustandssteuersätzen und den Übergangszustandssteuersätzen - die bisherige analoge Ansteuerung eines Wechselrichters als netzwinkelspezifische, diskrete Ansteuerung ausgeführt werden kann. Dadurch, dass jeweils ausgehend vom aktuellen Netzwinkel ϕ in Umlaufrichtung des Raumzeigers zurückliegende Sektoren, deren zugrunde liegender Steuersatz bereits als Basis für Ansteuersignale verwendet wurde, gesperrt werden, werden Fehlkommutierungen sicher vermieden. Des Weiteren wird auch ein unerwünschtes Umschalten, speziell ein in der Praxis mitunter beobachtetes hochfrequentes Hin- und Herschalten zwischen zwei Zuständen sicher unterbunden. Durch die Einführung der Zwischenzustände, bei denen der jeweils vorher geltende Leitzustand bereits abgeschaltet wurde, wird gewährleistet, dass Schwingungen, welche die genaue Erkennung der Kommutierungsbedingung erschweren, schnell abklingen oder sich gar nicht erst ausbilden. Durch die Überwachung der jeweils zu kommutierenden Phasen und der dortigen Eingangsspannungen des Wechselrichters beim speisenden Betrieb kann das Eintreten der Kommutierungsbedingung erkannt und die Kommutierung durch Übergang zum nächstfolgenden Leitzustand und dem entsprechenden Leitzustandssteuersatz ausgelöst werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn spätestens am Ende der Gültigkeitsdauer eines Übergangszustandssteuersatzes auf den in der jeweiligen Umlaufrichtung des Raumzeigers nächstfolgenden Leitzustandssteuersatz umgeschaltet wird, ist eine Zwangskommutierung implementiert. Die Zwangskommutierung besteht darin, dass am Ende der Gültigkeitsdauer eines Übergangszustandssteuersatzes in jedem Fall auf den nächstfolgenden Leitzustandssteuersatz umgeschaltet und damit kommutiert wird. Die Zwangskommutierung am Ende der Gültigkeitsdauer eines Übergangszustandssteuersatzes ist damit unabhängig davon, ob während der Gültigkeitsdauer des Übergangszustandssteuersatzes eine Erfüllung der dort für die Kommutierung überwachten Bedingung eingetreten ist.

Die eingangs genannte Aufgabe wird ebenfalls mit einem Wechselrichter, insbesondere einem von einer Antriebssteuerungseinheit umfassten Wechselrichter, gelöst, indem der Wechselrichter dafür bestimmt und eingerichtet ist, um nach dem oben skizzierten Verfahren und gegebenenfalls auch nach besonderen Ausführungsformen des Verfahrens zu arbeiten.

Dafür ist vorgesehen, dass der Wechselrichter nach dem Verfahren wie hier und im Folgenden beschrieben arbeitet und dazu Mittel zur Durchführung des Verfahrens umfasst. Die Erfindung ist dabei bevorzugt in Software und/oder Firmware implementiert. Die Erfindung ist damit einerseits auch ein Steuerungsprogramm in Form eines Computerprogramms mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Wechselrichter mit einer Wechselrichtersteuerungseinrichtung, die in an sich bekannter Art und Weise eine Verarbeitungseinheit in Form von oder nach Art eines Mikroprozessors sowie einen Speicher umfasst, wobei in den Speicher der Wechselrichtersteuerungseinrichtung ein solches Steuerungs-/Computerprogramm geladen oder ladbar ist. Ein solches Steuerungsprogramm oder eine Implementierung der Funktionalität eines solchen Steuerungsprogramms in Firmware sind damit Mittel zur Durchführung des Verfahrens und gegebenenfalls seiner Ausgestaltungen. Weitere Mittel zur Durchführung des Verfahrens sind die Wechselrichtersteuerungseinrichtung und - bei einer Implementierung der Erfindung in Software - die dortige Verarbeitungseinheit und der Speicher mit dem dort vorgehaltenen Steuerungsprogramm.

Vorteilhafte Ausgestaltungen des Wechselrichters ergeben sich aus einer Umsetzung, insbesondere einer Umsetzung in Software und/oder Firmware, einzelner oder mehrerer Merkmale der auf den ersten Anspruch rückbezogenen Ansprüche.

Der Vorteil der Erfindung und ihrer Ausgestaltungen besteht damit insbesondere darin, dass die Ansteuerung des Wechselrichters nun digital erfolgen kann. Gleichzeitig wird der Umschaltvorgang sauber definiert. Es können keine Schwingungen im Kommutierungsfall auftreten, die sich im schlimmsten Fall bis zum Abschalten des hier als Antriebssteuerungseinheit bezeichneten Gerätes aufschwingen können. Des Weiteren ergibt sich bei Anwendung des Verfahrens eine Kommutierung sehr nahe an den gewünschten Schaltzeitpunkten und zwar ohne große aufgrund starker Filter resultierender Zeitverzögerungen, die zu hohen kapazitiven Ausgleichsströmen führen würden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Änderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/ oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Antriebssteuerungseinheit mit einem Wechselrichter auf einer Hochspannungsseite und einer Wechselrichtersteuerungseinrichtung zur Generierung von Ansteuersignalen für den Wechselrichter auf einer Niederspannungsseite,
- FIG 2: eine grundsätzlich an sich bekannte Schaltung einer Antriebssteuerungseinheit gemäß FIG 1,
- FIG 3: ein Raumzeigerdiagramm,
- FIG 4: eine Tabelle zur Interpretation der in FIG 3 symbolisch gezeigten Leit- und Übergangszustandssteuersätze,
- FIG 5: eine tabellarische Darstellung der Leit- und Übergangszustandssteuersätze,
- FIG 6: ein Flussdiagramm zur im Rahmen des hier beschriebenen Verfahrens erfolgenden Sektorauswahl und
- FIG 7: eine tabellarische Darstellung der innerhalb des Flussdiagramms abgeprüften Bedingungen.

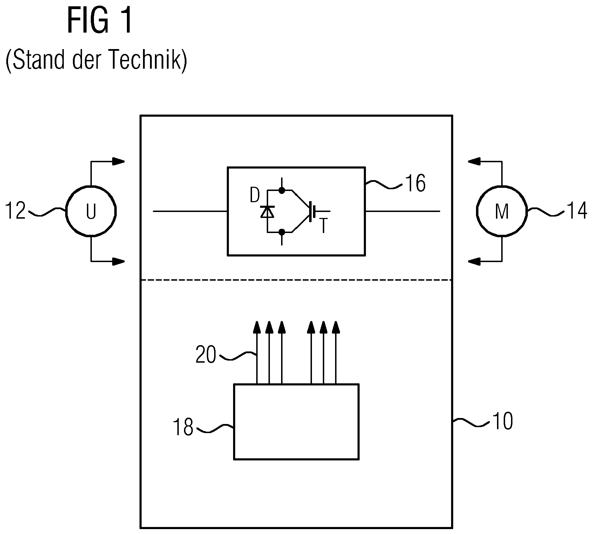

FIG 1 zeigt schematisch vereinfacht eine Antriebssteuerungseinheit 10, die eingangsseitig an eine Spannungsquelle 12 angeschlossen oder anschließbar ist und an die ausgangsseitig eine Last angeschlossen oder anschließbar ist. Bei der angeschlossenen Last handelt es sich zum Beispiel um einen drehzahlgeregelten Elektromotor 14. Die Antriebssteuerungseinheit 10 umfasst einen Wechselrichter 16 mit einer nur schematisch dargestellten, mit steuerbaren Halbleiterschaltern T und antiparallelen Dioden D bestückten, an sich bekannten Brückenschaltung, insbesondere in einer Ausführung als IGBT-B6-Brücke.

Zur Ansteuerung der Halbleiterschalter T des Wechselrichters 16 ist eine Wechselrichtersteuerungseinrichtung 18 vorgesehen. Die Wechselrichtersteuerungseinrichtung 18 erzeugt aufgrund einer von der Wechselrichtersteuerungseinrichtung 18 umfassten Ansteuerlogik für jeden Halbleiterschalter T ein Ansteuersignal 20, das dem jeweiligen Halbleiterschalter T unmittelbar oder mittelbar, zum Beispiel durch einen zwischengeschalteten Ausgangstreiber, zugeführt wird.

Der Wechselrichter 16 gehört zu einer Hochspannungsseite der Antriebssteuerungseinheit 10. Die Wechselrichtersteuerungseinrichtung 18 gehört demgegenüber zu einer Niederspannungsseite der Antriebssteuerungseinheit 10. Hochspannungs- und Niederspannungsseite sind in der Darstellung durch eine gestrichelte Linie getrennt und üblicherweise ist zwischen der Hochspannungs- und Niederspannungsseite eine Potentialtrennung vorgesehen.

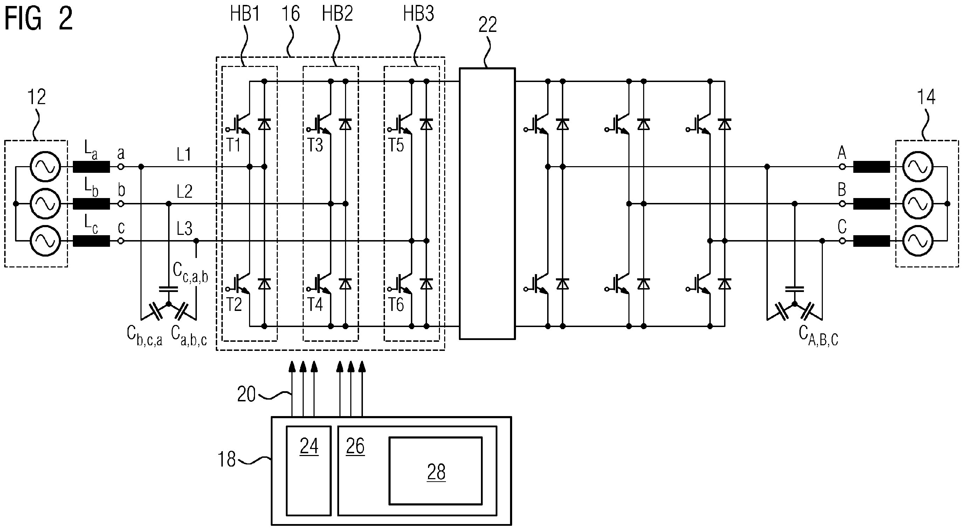

Die Darstellung in FIG 2 zeigt mit weiteren Details eine an sich bekannte Schaltung einer Antriebssteuerungseinheit 10 mit einem netzseitigen Wechselrichter 16 und den davon umfassten Halbleiterschaltern T, die zur eindeutigen Referenzierung mit T1, T2, T3, T4, T5 und T6 bezeichnet sind, und einem nicht weiter bezeichneten lastseitigen Wechselrichter. Im Anschluss an den netzseitigen Wechselrichter 16 und damit zwischen diesem und dem lastseitigen Wechselrichter umfasst die Schaltung in an sich bekannter Art und Weise einen Zwischenkreis 22, zum Beispiel einen Stromzwischenkreis oder einen Spannungszwischenkreis.

Das hier vorgestellte Verfahren ist zur Ansteuerung eines netzseitigen Wechselrichters 16 anwendbar. Auch wenn hier die beiden von der Schaltung einer Antriebssteuerungseinheit 10 umfassten Wechselrichter 16 mit identischer Topologie dargestellt sind, kommen durchaus auch abweichende Topologien in Betracht, zum Beispiel eingangsseitig dreiphasig und lastseitig zweiphasig oder umgekehrt. Das hier vorgestellte Verfahren ist nicht auf Wechselrichter 16 mit einer dreiphasigen Topologie beschränkt, sondern auch für Wechselrichter anderer Topologien bestimmt und anwendbar.

In der Darstellung in FIG 2 sind eingangsseitig noch zu jeder Phase L1, L2, L3 die Netzinduktivitäten Lₐ, L_{b}, L_{c} dargestellt. Die an einem Sternpunkt zusammengeschlossenen Kondensatoren sind mit C_{a,b,c,} C_{b,c,a} und C_{c,a,b} bezeichnet und stellen die Kapazitäten zwischen den mit a, b und c bezeichneten Punkten dar. Zur erleichterten Bezugnahme sind die sogenannten Halbbrücken des Wechselrichters 16 mit den jeweils paarweise einer Phase zugeordneten Halbleiterschaltern T1, T2; T3, T4; T5, T6 mit HB1, HB2 und HB3 bezeichnet. Eine erste, der Phase L1 zugeordnete Halbbrücke HB1 umfasst die mit T1 und T2 bezeichneten Halbleiterschalter. Eine zweite, der Phase L2 zugeordnete Halbbrücke HB2 umfasst die mit T3 und T4 bezeichneten Halbleiterschalter und eine dritte, der Phase L3 zugeordnete Halbbrücke HB3 umfasst die mit T5 und T6 bezeichneten Halbleiterschalter.

Für die Wechselrichtersteuerungseinrichtung 18 ist gezeigt, dass diese eine Verarbeitungseinheit 24 in Form von oder nach Art eines Mikroprozessors sowie einen Speicher 26 umfasst. In den Speicher 26 ist ein Steuerungsprogramm 28 zur Generierung von Ansteuersignalen 20 und damit zur Ansteuerung der Halbleiterschalter T1-T6 entsprechend dem von dem Steuerungsprogramm 28 umfassten Ansteuerungsschema geladen. Das Ansteuerungsschema ist eine Implementierung des gegenständlichen Verfahrens zum Betrieb eines Wechselrichters 16 in Software. Anstelle eines Steuerungsprogramms 28 mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder den Begriffen Steuerungsprogramm und Computerprogramm auch andere Implementationsmöglichkeiten, nämlich insbesondere eine Implementation in Firmware oder in Firm- und Software oder in Firm- und Hardware, umfasst sind.

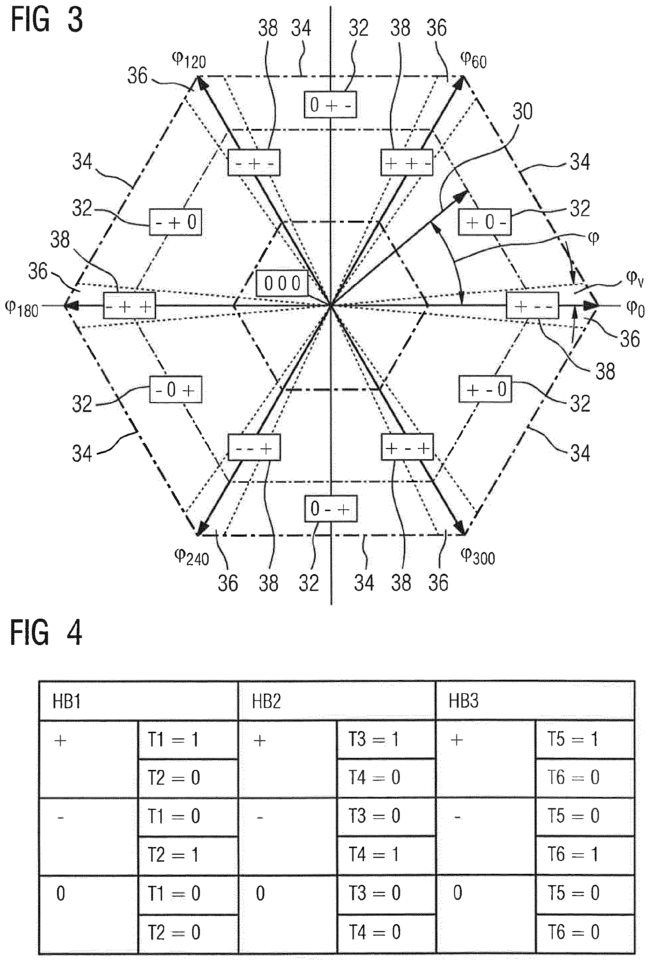

Die Darstellung in FIG 3 zeigt auf der Basis eines an sich bekannten Raumzeigerdiagramms eine Momentaufnahme eines rotierenden Raumzeigers 30. Die Lage des Raumzeigers 30 ergibt sich aufgrund eines jeweils ermittelten Netzwinkels ϕ. Dieser ergibt sich seinerseits aus einer Messung der am Wechselrichter 16 anliegenden Eingangsspannungen.

Die Darstellung in FIG 3 umfasst sechs Hauptsektoren, die jeweils spezifischen Netzwinkelintervallen zugeordnet sind. Ein erster Hauptsektor umfasst das Netzwinkelintervall von ϕ =0° bis ϕ =60°. Ein zweiter Hauptsektor umfasst das Netzwinkelintervall von ϕ =60° bis ϕ =120°. Ein dritter Hauptsektor umfasst das Netzwinkelintervall von ϕ =120° bis ϕ =180° und so weiter.

Jedem Hauptsektor ist ein von einem Leitzustandssteuersatz 32 definierter Sektor 34 zugeordnet. Die Zuordnung ist allerdings auch umgekehrt gegeben, weil jeder Leitzustandssteuersatz 32 und damit jeder jeweils resultierende Leitzustand für ein bestimmtes Netzwinkelintervall definiert ist. Für jeden Leitzustandssteuersatz 32 sind in der Darstellung drei Symbole gezeigt, welche die von dem Leitzustandssteuersatz 32 neben der Spezifikation des jeweiligen Netzwinkelintervalls umfassten Daten repräsentieren. Für die Erläuterung dieser Symbole wird auf die Darstellung in FIG 4 verwiesen.

Die Darstellung in FIG 4 zeigt eine Tabelle mit sechs Spalten, wobei die beiden ersten Spalten für die erste Halbbrücke HB1 (FIG 2) des Wechselrichters 16, die dritte und vierte Spalte für die zweite Halbbrücke HB2 des Wechselrichters 16 und die beiden letzten Spalten für die dritte Halbbrücke HB3 des Wechselrichters 16 gelten. Die auf diese Weise jeweils paarig zusammengehörigen Spalten zeigen auf der linken Seite die auch zur Darstellung der Leitzustandssteuersätze 32 verwendeten Symbole und auf der rechten Seite die zugehörigen Zustände der jeweiligen Halbleiterschalter T1, T2; T3, T4; T5, T6 der jeweiligen Halbbrücken HB1, HB2, HB3.

Der durch die Symbole "+", "0" und "-" dargestellte Leitzustandssteuersatz 32 des ersten Sektors 34 bedeutet demnach eine Aktivierung des Halbleiterschalters T1, eine Deaktivierung des Halbleiterschalters T2 (FIG 4: Spalte 2, oberes Feld), eine Deaktivierung der beiden von der zweiten Halbbrücke HB2 umfassten Halbleiterschalter T3 und T4 (FIG 4: Spalte 4, unteres Feld) sowie eine Deaktivierung des Halbleiterschalters T5 und eine Aktivierung des Halbleiterschalters T6 (FIG 4: Spalte 6, mittleres Feld). Für die anderen Leitzustandssteuersätze 32 gilt dieses Interpretationsschema für die dort jeweils gezeigten Symbole entsprechend. Aufgrund der Leitzustandssteuersätze 32 erfolgt zur entsprechenden Ansteuerung der Halbleiterschalter T1-T6 eine Generierung der jeweiligen Ansteuersignale 20 (FIG 2).

Kurz gefasst lässt sich zur Interpretation der in FIG 4 gezeigten Tabelle sagen, dass das Symbol "+" jeweils die Aktivierung eines oberen Halbleiterschalters T1, T3, T5 und die Deaktivierung des in derselben Halbbrücke HB1, HB2, HB3 zugehörigen unteren Halbleiterschalters T2, T4, T6 bedeutet. Entsprechend bedeutet das Symbol "-" jeweils die Deaktivierung eines oberen Halbleiterschalters T1, T3, T5 und die Aktivierung des in derselben Halbbrücke HB1, HB2, HB3 zugehörigen unteren Halbleiterschalters T2, T4, T6. Das Symbol "0" bedeutet die Deaktivierung eines oberen Halbleiterschalters T1, T3, T5 und die Deaktivierung des in derselben Halbbrücke HB1, HB2, HB3 zugehörigen unteren Halbleiterschalters T2, T4, T6.

Weil jeder Leitzustandssteuersatz 32 genau einmal das Symbol "+" und ebenfalls genau einmal das Symbol "-" umfasst, ist nach einer Generierung entsprechender Ansteuersignale 20 genau ein oberer Halbleiterschalter T1, T3, T5 und genau ein unterer Halbleiterschalter T2, T4, T6 geschlossen (aktiviert, leitend), während die anderen Halbleiterschalter T1-T6 geöffnet (deaktiviert, nicht leitend) sind. Eine solche Konstellation stellt einen Leitzustand dar, denn der Zwischenkreis 22 ist mit zwei der drei Phasen L1, L2, L3 verbunden. Je nach Sektor 34 und dem dort gültigen Leitzustandssteuersatz 32 sind dabei unterschiedliche Phasen L1, L2, L3 mit dem Zwischenkreis 22 verbunden und die Umschaltung der Phasen L1, L2, L3 stellt die Kommutierung dar.

Neben den Leitzustandssteuersätzen 32 sind in der Darstellung in FIG 3 auch sechs zu jeweils sechs Kommutierungssektoren 36 gehörende Übergangszustandssteuersätze 38 gezeigt. Zur Interpretation der von den Übergangszustandssteuersätzen 38 umfassten Symbole wird auf die obige Erläuterung und die Darstellung in FIG 4 verwiesen. Jeder Übergangszustandssteuersatz 38 ist einem (nicht bezeichneten) Sektor des Raumzeigerdiagramms zugeordnet und entsprechend umfasst jeder Übergangszustandssteuersatz 32 auch eine Spezifikation des jeweiligen Netzwinkelintervalls.

Jeder Übergangszustandssteuersatz 38 gehört zu einem vom jeweils zugrunde liegenden Kommutierungssektor 36 netzwinkelspezifisch definierten Übergangszustand und die Übergangszustände befinden sich jeweils zwischen zwei Leitzuständen. Leit- und Übergangszustände folgen also alternierend aufeinander. Eine Breite der Kommutierungssektoren 36 und damit ein Gültigkeitsbereich der Übergangszustände ergibt sich mit einem vorgegebenen oder vorgebbaren Öffnungswinkel der Kommutierungssektoren 36, der in der Darstellung mit ϕᵥ eingezeichnet ist. Der als Index verwendete Buchstabe v kann auch als aus zwei diagonalen Schenkeln gebildet aufgefasst werden. Insofern symbolisiert der Buchstabe v einen von den beiden Schenkeln eingeschlossenen Winkel, hier also den Öffnungswinkel ϕᵥ der Kommutierungssektoren 36, denen jeweils ein Übergangszustand und entsprechend ein Übergangszustandssteuersatz 38 zugeordnet ist.

Der Öffnungswinkel ϕᵥ ist entweder fest vorgegeben oder bei einer besonderen Ausführungsform des hier beschriebenen Verfahrens variabel. Variabel ist der Öffnungswinkel ϕᵥ zum Beispiel in dem Sinne, dass dieser im Rahmen einer Parametrierung der Wechselrichtersteuerungseinrichtung 18 eingestellt und damit zur weiteren Verwendung vorgegeben wird.

Weil jeder Übergangszustandssteuersatz 38 jeweils genau zwei identische Symbole, zum Beispiel "-", "-", "+" oder "+", "+", "-", und kein Symbol "0" umfasst, sind bei einem Übergangszustand immer genau zwei obere oder untere Halbleiterschalter T1-T6 aktiviert, so dass zwei Phasen L1, L2, L3 kurzgeschlossen sind und damit Spannungseinbrüche beim Abkommutieren einer Phase L1, L2, L3 vermieden oder zumindest reduziert werden können. Bei zwei aktivierten oberen Halbleiterschaltern T1, T3, T5 ist zudem genau ein unterer Halbleiterschalter T2, T4, T6 aktiviert. Bei zwei aktivierten unteren Halbleiterschaltern T2, T4, T6 ist entsprechend genau ein oberer Halbleiterschalter T1, T3, T5 aktiviert. Die anderen Halbleiterschalter T1-T6 sind deaktiviert.

Die strichpunktiert eingezeichneten äußeren und inneren Grenzen bezeichnen die Orte, an denen der Netzeingangsvektor maximal bzw. minimal zulässige Spannungen überschreitet, was zu einer Deaktivierung der Halbleiterschalter T1-T6 führt. Dafür kann ein spezieller Steuersatz vorgesehen sein, der weiter unten beschrieben wird.

Die Leitzustandssteuersätze 32 und die Übergangszustandssteuersätze 38 sind von dem Steuerungsprogramm 28 umfasst. Das Steuerungsprogramm 28 stellt also eine diese Steuersätze 32, 38 umfassende Datenbasis 28 dar. Grundsätzlich können die Steuersätze 32, 38 auch in einer externen, im Speicher 26 angelegten Datenbasis vorgehalten werden. Diese (ebenfalls mögliche) Situation ist nicht gezeigt, so dass das Steuerungsprogramm 28 hier und im Folgenden mitunter auch als Datenbasis 28 bezeichnet wird.

Bei der Ausführung des Verfahrens zum Betrieb eines Wechselrichters 16 werden folgende Verfahrensschritte ausgeführt:

Zunächst wird durch Messung der am Wechselrichter 16 anliegenden Eingangsspannungen ein jeweiliger Netzwinkel ϕ ermittelt. Dieser wird zur Festlegung einer Lage des rotierenden Raumzeigers 30 verwendet.

Mit dem ermittelten Netzwinkel ϕ wird in der Datenbasis 28 ein zu dem jeweiligen Netzwinkel ϕ gehöriger Leitzustands- oder Übergangszustandssteuersatz 32, 38 als Basis für Ansteuersignale 20 zur Ansteuerung der Halbleiterschalter T1-T6 ermittelt. Der jeweils ermittelte Steuersatz 32, 38 wird auch angewandt, indem die jeweils resultierenden Ansteuersignale 20 ausgegeben werden und damit ein entsprechender Zustand / eine entsprechende Schaltstellung der Halbleiterschalter T1-T6 bewirkt wird.

Bei der in FIG 3 gezeigten Momentaufnahme befindet sich der Raumzeiger 30 zunächst im ersten Sektor 34 (0° +ϕᵥ < ϕ < 60°-ϕᵥ) und entsprechend ist der erste Leitzustandssteuersatz 32 ("-", "0", "+") aktiv. Dieser bewirkt, dass die Phasen L1 und L3 auf den Zwischenkreis 22 geschaltet werden. Wenn kontinuierlich oder zu vorgegebenen oder vorgebbaren, insbesondere äquidistanten Zeitpunkten der jeweilige Netzwinkel ϕ ermittelt wird, rotiert der Raumzeiger 30, hier zum Beispiel in einer Richtung gegen den Uhrzeigersinn.

Der Raumzeiger 30 rotiert also in der hier angenommenen Situation in Richtung auf den gegen den Uhrzeigersinn an den momentanen Sektor 34 mit dem ersten Leitzustandssteuersatz 32 anschließenden Sektor mit einem ersten Übergangzustandssteuersatz 38. Beim Übergang auf den Sektor 36 mit dem Übergangzustandssteuersatz 38 und allgemein beim Übergang von einem Leitzustandssteuersatz 32 zu einem Übergangszustandssteuersatz 38 erfolgt eine neue Ansteuerung der Halbleiterschalter T1-T6 entsprechend der aufgrund des jeweiligen Übergangszustandssteuersatzes 38 resultierenden Ansteuersignale 20. Beim Übergang zum ersten Übergangzustandssteuersatz 38 wird hier die zuvor aktive Phase L1 mit der im nächsten Sektor 34 aufzukommutierenden Phase L2 kurzgeschlossen.

Mit der Gültigkeit eines Übergangszustandssteuersatzes 38 erfolgt also noch keine Kommutierung. Zumindest erfolgt die Kommutierung noch nicht unmittelbar mit der Gültigkeit eines Übergangszustandssteuersatzes 38. Die Kommutierung kann aber während der gesamten weiteren Gültigkeit des Übergangszustandssteuersatzes 38 stattfinden.

Dafür werden während der Gültigkeit eines Übergangszustandssteuersatzes 38 die Eingangsspannungen des Wechselrichters 16 überwacht. Bei Erreichen einer vorgegebenen oder vorgebbaren Bedingung in Bezug auf die überwachten Eingangsspannungen wird der in der jeweiligen Umlaufrichtung des Raumzeigers 30 nächstfolgende Leitzustandssteuersatz 32 ausgewählt. Mit der anschließenden Anwendung des ausgewählten Leitzustandssteuersatzes 32 erfolgt eine neue Ansteuerung der Halbleiterschalter T1-T6 sowie eine Kommutierung entsprechend der aufgrund dieses Leitzustandssteuersatzes 32 resultierenden Ansteuersignale 20. Die für die Auslösung der Kommutierung verwendete Bedingung kann zum Beispiel bedeuten, dass die überwachten Eingangsspannungen auf Gleichheit überprüft werden. Dann erfolgt die Kommutierung und der Übergang zum nächsten Leitzustandssteuersatz 32, wenn die Spannung über der abkommutierten Phase so weit gefallen ist, dass sie die Höhe der Spannung über der aufkommutierten Phase erreicht.

Wenn während der gesamten Gültigkeitsdauer eines Übergangszustandssteuersatzes 38 keine Erfüllung der für die Kommutierung jeweils überwachten Bedingung eingetreten ist, wird am Ende der Gültigkeitsdauer des Übergangszustandssteuersatzes 38 auf den in Umlaufrichtung des Raumzeigers 30 nächstfolgenden Leitzustandssteuersatz 32 umgeschaltet. Dies stellt gewissermaßen eine Zwangskommutierung dar, so dass in jedem Falle spätestens am Ende der Gültigkeitsdauer eines Übergangszustandssteuersatzes 38 kommutiert wird.

Unabhängig von einer Kommutierung während der Gültigkeitsdauer eines Übergangszustandssteuersatzes 38 oder am Ende der Gültigkeitsdauer eines Übergangszustandssteuersatzes 38 ist in jedem Zeitpunkt, also zu jedem Netzwinkel ϕ, vorgesehen, dass ein ausgehend vom jeweiligen Netzwinkel ϕ in Umlaufrichtung des Raumzeigers 30 zurückliegender Sektor 34, dessen zugrunde liegender Steuersatz 32 bereits als Basis für Ansteuersignale 20 verwendet wurde, gesperrt wird. Dies verhindert, dass nach der Kommutierung, also nach der Aktivierung eines neuen Leitzustandssteuersatzes 32, ein zurückliegender, bereits verwendeter Leitzustandssteuersatz 32 erneut zur Ansteuerung der Halbleiterschalter T1-T6 verwendet wird.

Im Ergebnis verhindert dies das bisher in der Praxis mitunter beobachtete Umschalten des Wechselrichters 16 zwischen zwei Zuständen. Ein derartiges Umschalten stellt eine Fehlkommutierung dar, die jetzt mit der Sperrung jeweils zurückliegender Leitzustandssteuersätze 32 sicher vermieden wird. Eine solche Fehlkommutierung konnte bisher auch hochfrequent auftreten, indem immer wieder zwischen zwei Zuständen hin und her geschaltet wurde. Dies konnte sogar zu Maschinenschäden führen. Dies ist mit dem hier vorgestellten Ansatz ebenfalls sicher vermieden.

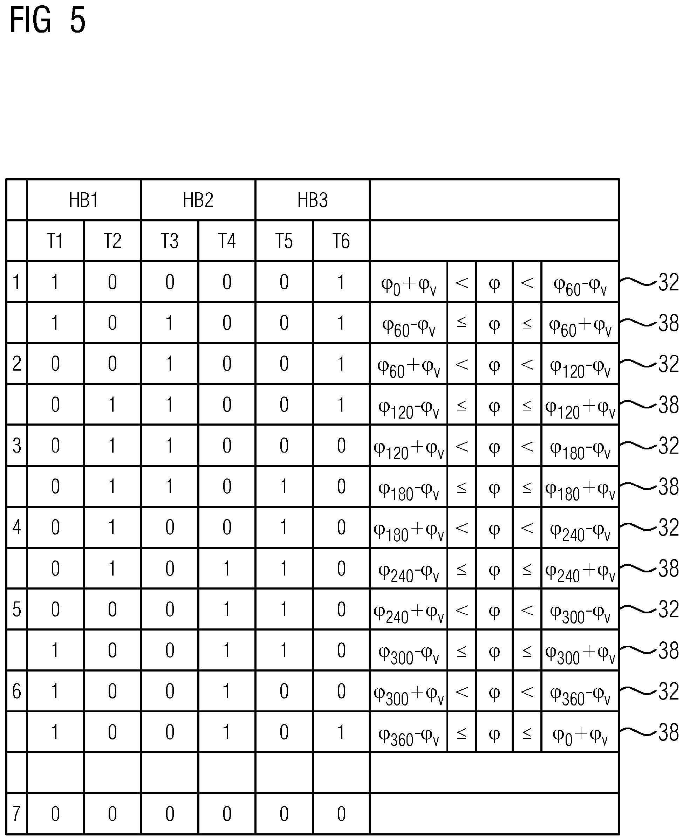

Die Darstellung in FIG 5 zeigt in tabellarischer Form die Leitzustandssteuersätze 32 und die Übergangszustandssteuersätze 38. In der linken Spalte ist mit den Ziffern 1, 2, 3 ..., 6 eine Nummerierung der Sektoren 34 des Raumzeigerdiagramms (FIG 3) eingetragen. Die zweite und die dritte Spalte umfassen die aufgrund der jeweiligen Leit- und Übergangszustandssteuersätze 32, 38 resultierenden Zustände der von der ersten Halbbrücke HB1 umfassten Halbleiterschalter T1, T2. Dafür ist über der zweiten Spalte, welche die Zustände des ersten Halbleiterschalters T1 umfasst, als Spaltenüberschrift der Text "T1" und entsprechend über der dritten Spalte, welche die Zustände des zweiten Halbleiterschalters T2 umfasst, als Spaltenüberschrift der Text "T2" gezeigt. Die vierte und fünfte Spalte sowie die sechste und siebte Spalte umfassen entsprechend die aufgrund der jeweiligen Leit- und Übergangszustandssteuersätze 32, 38 resultierenden Zustände der von der zweiten bzw. dritten Halbbrücke HB2, HB3 umfassten Halbleiterschalter T3, T4; T5, T6. Ganz rechts ist in der Tabelle das jeweilige Netzwinkelintervall gezeigt, für das der betreffende Leit- und Übergangszustandssteuersatz 32, 38 vorgesehen ist. Man erkennt, dass die einen Leitzustand spezifizierenden Netzwinkelintervalle jeweils um den Öffnungswinkel ϕᵥ vermindert sind und dass die einen Übergangszustand spezifizierenden Netzwinkelintervalle sich jeweils mit dem Öffnungswinkel ϕᵥ um die natürlichen Kommutierungspunkte erstrecken.

Als letzte Zeile der Tabelle ist in FIG 5 noch ein weiterer Zustand gezeigt, bei dem alle Halbleiterschalter T1-T6 deaktiviert (offen, nicht leitend) sind. Dieser Zustand wird als Anfangszustand während der Aufsynchronisation auf das Netz verwendet. Die bei der Raumzeigermodulation verwendeten Nullzeiger, bei denen alle drei oberen Halbleiterschalter T1, T3, T5 oder alle drei unteren Halbleiterschalter T2, T4, T6 aktiviert wurden, werden jetzt nicht mehr benötigt.

Im Steuerungsprogramm 28 kann mit dem jeweils ermittelten Netzwinkel ϕ durch eine geeignete Fallunterscheidung leicht ermittelt werden, welcher Leit- oder Übergangszustandssteuersatz 32, 38 zu dem jeweils aktuellen Netzwinkel ϕ gehört. Nach Ermittlung des jeweils dem aktuellen Netzwinkel ϕ zugehörigen Steuersatzes 32, 38 erfolgt auf dessen Basis die Ansteuerung der Halbleiterschalter T1-T6 des Wechselrichters 16.

Die Gesamtheit der in FIG 5 dargestellten Steuersätze 32, 38 kann zusammenfasst als Steuersatz für den Wechselrichter 16 aufgefasst werden.

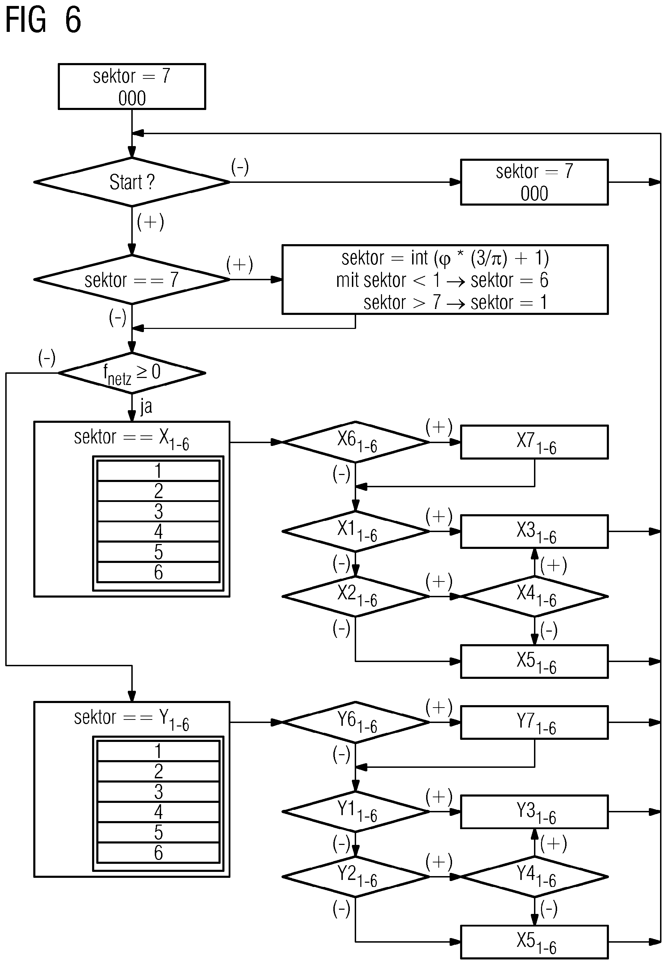

Die Darstellung in FIG 6 zeigt dazu ein Flussdiagramm für eine mögliche Implementation einer Sektorauswahl. In der Darstellung bedeutet "(+)" an eine jeweils geprüfte Bedingung, dass die geprüfte Bedingung erfüllt ist und bezeichnet damit einen "Ja-Zweig" innerhalb des Flussdiagramms. Entsprechend bezeichnet "(-)" einen "Nein-Zweig".

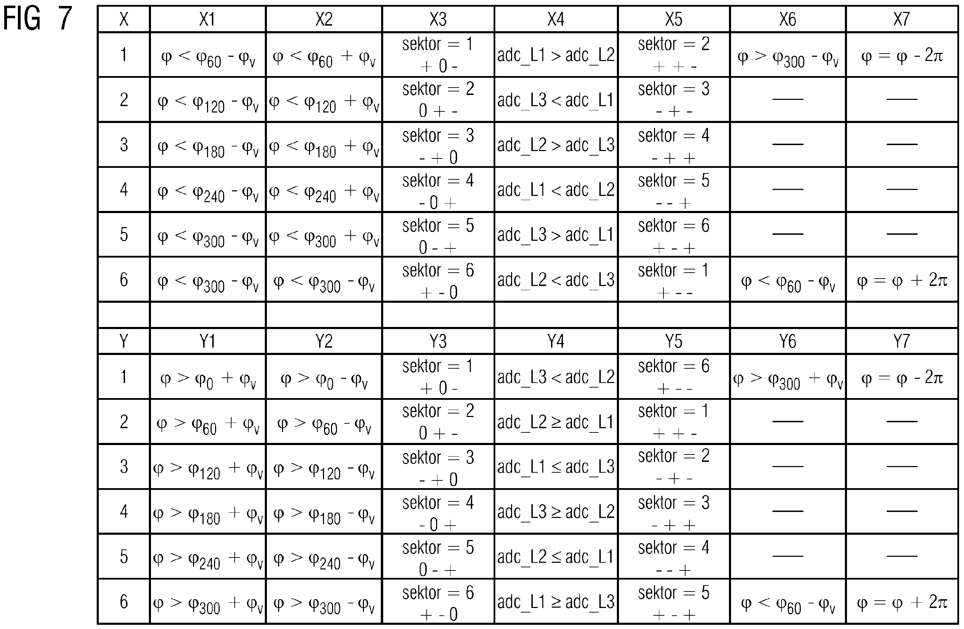

Mit der Auswahl eines Sektors 34 steht auch der jeweils zu verwendende Leitzustandssteuersatz 32 fest. Die Darstellung in FIG 7 zeigt dazu die im Rahmen des Flussdiagramms gemäß FIG 6 abgeprüften Bedingungen. Mit der Abfrage "f_{netz} >= 0" wird geprüft, ob eine Vorwärts- oder Rückwärtsumdrehung gegeben ist.

Wenn diese Bedingung erfüllt ist, werden für den Vorwärtslauf die Bedingungen X1 bis X7 in der im Flussdiagram gemäß FIG 6 gezeigten Reihenfolge geprüft. Die konkrete Formulierung der einzelnen Bedingungen ergibt sich aus der Tabelle in FIG 7 und zwar dort aus der oberen Hälfte der Tabelle (Spalten X1, X2, ..., X7). Nachdem jede dieser Spalten sechs Zeilen umfasst, ergibt sich die konkrete Formulierung der Bedingung einerseits aus der in dem Flussdiagramm angegebenen Bezeichnung und andererseits aus dem jeweiligen Sektor 34 (FIG 3), in dem sich der Raumzeiger 30 momentan befindet. Die im Flussdiagramm angegebene Bezeichnung spezifiziert dabei eine Spalte der Tabelle und der jeweilige Sektor 34 spezifiziert eine Zeile der Tabelle.

Wenn sich der Raumzeiger 30 also zum Beispiel - wie in FIG 3 gezeigt - im ersten Sektor 34 befindet, wird bei der Abarbeitung des Flussdiagramms in FIG 6 an der Stelle der Prüfung der mit "X6₁₋₆" bezeichneten Bedingung die in der Tabelle in FIG 7 (in der dortigen oberen Hälfte) in der mit "X6" überschriebenen Spalte und dort in der ersten Zeile (aufgrund des ersten Sektors 34) angegebene Bedingung geprüft. Die geprüfte Bedingung lautet demnach "ϕ > ϕ₃₀₀ - ϕᵥ". Wenn diese Bedingung momentan nicht erfüllt ist, wird zur Prüfung der mit "X1₁₋₆" bezeichneten Bedingung verzweigt. Dort wird erneut anhand der Tabelle in FIG 7 die konkret zu prüfende Bedingung ausgewählt (Spalte mit "X1"; erste Zeile aufgrund des immer noch im ersten Hauptsektor befindlichen Raumzeigers 30). Die konkret geprüfte Bedingung lautet also "ϕ < ϕ₆₀ - ϕᵥ". Damit wird geprüft, ob sich der Raumzeiger 30 noch vor dem einen Übergangszustandssteuersatz 38 zugeordneten Sektor des Raumzeigerdiagramms befindet. Dies ist hier der Fall (siehe Momentaufnahme in FIG 3), so dass zu der mit "X3₁₋₆" bezeichneten Anweisung verzweigt und dort der Leitzustandssteuersatz 32 ausgewählt wird: "sektor = 1 / + 0 -" (Spalte mit "X3"; erste Zeile aufgrund des immer noch im ersten Hauptsektor befindlichen Raumzeigers 30).

Wenn diese Bedingung nicht erfüllt ist, befindet sich der Raumzeiger 30 bereits in dem einen Übergangszustandssteuersatz 38 zugeordneten Sektor des Raumzeigerdiagramms. Dann wird mit der mit "X2₁₋₆" bezeichneten Bedingung geprüft, ob sich der Raumzeiger 30 noch innerhalb dieses Sektors oder schon im nächsten Sektor 34 befindet (Bedingung "ϕ < ϕ₆₀ + ϕᵥ"). Wenn die Bedingung erfüllt ist, sich der Raumzeiger 30 also noch in dem einem Übergangszustandssteuersatz 38 zugeordneten Sektor des Raumzeigerdiagramms befindet, wird zur Prüfung der Kommutierungsbedingung verzweigt (Bedingung "X4₁₋₆"). Auch hier wird wieder die konkret zu prüfende Bedingung anhand des Hauptsektors, in dem sich der Raumzeiger 30 befindet, und der zugehörigen Zeile ausgewählt. Die zu prüfende Bedingung bei einem sich im ersten Hauptsektor befindenden Raumzeiger 30 lautet demnach: "adc_L1 > adc_L2". Der symbolische Bezeichner "adc_L1" meint dabei den analog/digital gewandelten Wert der Spannung über der Phase L1. Entsprechend meinen die symbolischen Bezeichner "adc_L2" und "adc_L3" den analog/digital gewandelten Wert der jeweiligen Spannung über der Phase L2 bzw. L3. In Abhängigkeit vom Ergebnis der Prüfung der Kommutierungsbedingung bleibt entweder der bereits ausgewählte Leitzustandssteuersatz 32 aktiv (Verzweigung zu "X3₁₋₆") oder es wird ein Übergangszustandssteuersatz 38 ausgewählt (Verzweigung zu "X5₁₋₆") .

Wenn sich der Raumzeiger 30 bei der Prüfung der mit "X2₁₋₆" bezeichneten Bedingung bereits im nächsten Sektor 34 befindet, die Bedingung also nicht erfüllt ist, wird direkt zu der mit "X5₁₋₆" bezeichneten Anweisung verzweigt und dort der Übergangszustandssteuersatz 38 ausgewählt: "sektor = 2 / + + -". Mit dem jetzt erhöhten Wert der Variablen "sektor", der anzeigt, dass sich der Raumzeiger 30 im zweiten Hauptsektor befindet, erfolgt beim nächsten Durchlauf des Flussdiagramms die Zwangskommutierung und der Übergang auf den nächsten Leitzustandssteuersatz 32. Dies ist ein Beispiel für eine Realisierung des Merkmals, dass spätestens am Ende der Gültigkeitsdauer eines Übergangszustandssteuersatzes 38 auf den in der jeweiligen Umlaufrichtung des Raumzeigers 30 nächstfolgenden Leitzustandssteuersatz 32 umgeschaltet wird.

In der Tabelle wird die den momentanen Hauptsektor, in dem sich der Raumzeiger 30 befindet, bezeichnende Variable ("sektor") nur in "Vorwärtsrichtung" erhöht (Spalte mit "X5"). In der sechsten Zeile, die ausgewertet wird, wenn sich der Raumzeiger 30 im sechsten Hauptsektor befindet, ist ein Übergang zum an den sechsten Hauptsektor anschließenden ersten Hauptsektor möglich (Spalte "X6", Zeile 6: "sektor = 1 / + - -"). Auf diese Weise wird realisiert, dass in Umlaufrichtung des Raumzeigers 30 niemals ein zurückliegender Sektor 34, dessen zugrunde liegender Steuersatz 32 bereits als Basis für Ansteuersignale 20 verwendet wurde, ausgewählt werden kann. Der Sektor ist damit gesperrt.

Für die im Raumzeigerdiagramm nachfolgenden Hauptsektoren gilt das oben Gesagte entsprechend. Für die Rückwärtsumdrehung gilt ebenfalls das oben Gesagte entsprechend, mit der Ausnahme, dass dann der Zugriff auf die mit "Y1, Y2, ..., Y6" überschriebenen Spalten der Tabelle (FIG 7; untere Hälfte) erfolgt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen:
Es wird durch Messen der drei Eingangsspannungen und anschließende Koordinatentransformation ein Raumzeiger 30 gebildet, der den Netzwinkel ϕ, die Netzfrequenz f und die Netzamplitude darstellt. Durch die Netzfrequenz f und den Netzwinkel ϕ kann die Umlaufrichtung bestimmt werden. Nach der Aufsynchronisation auf das Netz kann nun der Steuersatz mit den davon umfassten Leitzustandssteuersätzen 32 und den ebenfalls davon umfassten Übergangszustandssteuersätzen 38 freigegeben werden. Der Steuersatz ist bei der anhand der Figuren beschriebenen Ausführungsform so angelegt, das es sieben Hauptzustände in Form der sechs Leitzustandssteuersätze 32 zuzüglich des einen Zustands, in dem alle Halbleiterschalter T1-T6 ausgeschaltet sind, und sechs Übergangszustände in Form der sechs Übergangszustandssteuersätze 38 gibt. Durch die einzelnen Zustände 32, 38 werden den Ausgangstreibern für die Ansteuerung der Halbleiterschalter T1-T6 jeweils feste Signalzustände zugeordnet. Abweichend vom Raumzeigersteuerverfahren gibt es in den Sektoren 34, 36 kein hochfrequentes Schalten zwischen den verschiedenen Zeigern, die den Sektor aufspannen. Ferner werden die Nullzeiger, die alle drei oberen Halbleiterschalter T1, T3, T5 bzw. alle drei unteren Halbleiterschalter T2, T4, T6 einschalten, nicht benötigt. Stattdessen gibt es nur den Zustand, in dem alle Halbleiterschalter T1-T6 ausgeschaltet sind.

Bei Erreichen eines Kommutierungssektors 36 werden die betreffenden Eingangsspannungen für die Kommutierung herangezogen. Erreicht die Eingangsspannung zwischen den beiden zu kommutierenden Spannungen den dem jeweiligen Kommutierungssektor 36 zugeordneten Wert oder die dem jeweiligen Kommutierungssektor 36 zugeordnete Differenz, so wird der Kommutierungssektor 36 für eine einstellbare Dauer geschaltet. Nach Ablauf dieser Zeit geht der Kommutierungssektor 36 automatisch in den nachfolgenden Sektor 34 (abhängig von der Umlaufrichtung) über. Dabei ist es nur möglich, sich in Abhängigkeit von der Umlaufrichtung durch die Sektoren 34, 36 zu bewegen. Zurückliegende Sektoren 34, 36 werden gesperrt, so dass ein ungewolltes Schwingen zwischen den beiden jeweils zu kommutierenden Phasen L1, L2, L3 vermieden wird. Ferner ist eine Art Zwangskommutierung vorgesehen. Sollte innerhalb des jeweiligen Kommutierungssektors 36 keine Kommutierung stattfinden, wird sie zwangsweise eingeleitet.

Der Zeitpunkt des Umkommutierungsvorgangs kann mit der zugrundeliegenden Größe des Kommutierungssektors 36 von verschiedenen Faktoren abhängig gemacht werden, beispielsweise einem grundsätzlich frei wählbaren Öffnungswinkel ϕᵥ. Beispielsweise kommt ein Öffnungswinkel von ϕᵥ = 3,6° für die Kommutierungssektoren 36 in Betracht. Dies entspricht einer Dauer des Kommutierungssektors 36 von zehn Mikrosekunden.

Die Erfindung ist also kurz gefasst ein Verfahren zum Betrieb eines Wechselrichters 16 und ein nach dem Verfahren arbeitender Wechselrichter 16, wobei der Wechselrichter 16 gemäß in einer Datenbasis vorgehaltenen netzwinkelspezifischen Steuersätzen 32, 38 angesteuert wird und wobei von einem Steuersatz 32, 38 zum nächsten Steuersatz 32, 38 nur in einer sich aus einem jeweiligen Netzwinkel ϕ ergebenden Umlaufrichtung des Raumzeigers 30 umgeschaltet werden kann.

## Patentansprüche

1. Verfahren zum Betrieb eines dreiphasigen, steuerbare Halbleiterschalter (T1-T6) umfassenden Wechselrichters (16), insbesondere zum Betrieb eines von einer Antriebssteuerungseinheit (10) umfassten Wechselrichters (16),
wobei durch Messung der an dem Wechselrichter (16) anliegenden Eingangsspannungen ein jeweiliger Netzwinkel (ϕ) ermittelt und der Netzwinkel (ϕ) zur Festlegung einer Lage eines rotierenden Raumzeigers (30) verwendet wird,
wobei in einer Datenbasis (28) eine Mehrzahl von netzwinkelspezifischen Steuersätzen für Leitzustände - Leitzustandssteuersätze (32) - und eine Mehrzahl von netzwinkelspezifischen Steuersätzen für Übergangszustände - Übergangszustandssteuersätze (38) - vorgehalten werden,
wobei die Leitzustandssteuersätze (32) jeweils die Aktivierung genau eines oberen Halbleiterschalters (T1-T6) und genau eines unteren Halbleiterschalters (T1-T6) des Wechselrichters (16) vorsehen,
wobei die Übergangszustandssteuersätze (38) jeweils die Aktivierung von genau zwei oberen oder unteren Halbleiterschaltern (T1-T6) und die Aktivierung von genau einem unteren bzw. oberen Halbleiterschalter (T1-T6) des Wechselrichters (16) vorsehen,
wobei die Leitzustandssteuersätze (32) und die Übergangszustandssteuersätze (38) Sektoren (34) definieren, die in einer jeweiligen Umlaufrichtung des Raumzeigers (30) alternierend und zumindest teilweise überlappend aufeinander folgen,
wobei mit dem ermittelten Netzwinkel (ϕ) in der Datenbasis (28) ein zu dem jeweiligen Netzwinkel (ϕ) gehöriger Leitzustands- oder Übergangszustandssteuersatz (32, 38) als Basis für Ansteuersignale (20) zur Ansteuerung der Halbleiterschalter (T1-T6) ermittelt wird,
wobei beim Übergang von einem Leitzustandssteuersatz (32) zu einem Übergangszustandssteuersatz (38) eine neue Ansteuerung der Halbleiterschalter (T1-T6) entsprechend der aufgrund des jeweiligen Übergangszustandssteuersatzes (38) resultierenden Ansteuersignale (20) erfolgt,
wobei während der Gültigkeit eines Übergangszustandssteuersatzes (38) die Eingangsspannungen des Wechselrichters (16) überwacht werden und bei Erreichen einer vorgegebenen oder vorgebbaren Bedingung in Bezug auf die überwachten Eingangsspannungen der in der jeweiligen Umlaufrichtung des Raumzeigers (30) nächstfolgende Leitzustandssteuersatz (32) ausgewählt wird und eine neue Ansteuerung der Halbleiterschalter (T1-T6) sowie eine Kommutierung entsprechend der aufgrund dieses Leitzustandssteuersatzes (32) resultierenden Ansteuersignale (20) erfolgt und
wobei ein ausgehend vom jeweiligen Netzwinkel (ϕ) in Umlaufrichtung des Raumzeigers (30) zurückliegender Sektor (34), dessen zugrunde liegender Steuersatz (32) bereits als Basis für Ansteuersignale (20) verwendet wurde, gesperrt wird.

2. Verfahren nach Anspruch 1, wobei spätestens am Ende der Gültigkeitsdauer eines Übergangszustandssteuersatzes (38) auf den in der jeweiligen Umlaufrichtung des Raumzeigers (30) nächstfolgenden Leitzustandssteuersatz (32) umgeschaltet wird.

3. Verfahren nach Anspruch 1 oder 2, wobei als Bedingung in Bezug auf die überwachten Eingangsspannungen die überwachten Eingangsspannungen auf Gleichheit geprüft werden.

4. Verfahren nach einem der vorangehenden Ansprüche, wobei die Datenbasis (28) zumindest zwölf Steuersätze (32,38), und zwar sechs Leitzustandssteuersätze (32) und sechs Übergangszustandssteuersätze (38), umfasst.

5. Verfahren nach einem der vorangehenden Ansprüche, wobei mit einem vorgegebenen oder vorgebbaren Öffnungswinkel (ϕᵥ) eine Breite der Übergangszustände und damit ein Gültigkeitsbereich der Übergangszustandssteuersätze (38) definiert wird.

6. Verfahren nach einem der vorangehenden Ansprüche, wobei ein Steuersatz definiert und in der Datenbasis (28) vorgehalten wird, der die Deaktivierung aller oberen und unteren Halbleiterschalter (T1-T6) des Wechselrichters (16) vorsieht, wobei dieser Steuersatz beim Aufsynchronisieren auf das Netz oder im Fehlerfall verwendet wird.

7. Computerprogramm mit Programmcodemitteln, um alle Schritte von jedem beliebigen der Ansprüche 1 bis 6 durchzuführen, wenn das Computerprogramm als Steuerungsprogramm (28) auf einer Wechselrichtersteuerungseinrichtung (18) einer Antriebssteuerungseinheit (10) ausgeführt wird.

8. Wechselrichtersteuerungseinrichtung (18) mit einer Verarbeitungseinheit (24) und einem Speicher (26), in den als Steuerungsprogramm (28) ein Computerprogramm nach Anspruch 7 geladen ist, das im Betrieb der Wechselrichtersteuerungseinrichtung (18) durch dessen Verarbeitungseinheit (24) ausgeführt wird.

9. Antriebssteuerungseinheit (10) mit einer Wechselrichtersteuerungseinrichtung (18) nach Anspruch 8.

## Claims

1. Method for operating a three-phase inverter (16) comprising controllable semiconductor switches (T1-T6), in particular for operating an inverter (16) incorporated in a drive control unit (10),
wherein a respective line angle (ϕ) is determined by measurement of the input voltages present at the inverter (16) and the line angle (ϕ) is used for specifying a position of a rotating space vector (30),
wherein a plurality of line-angle-specific control sets for conducting states - conducting state control sets (32) - and a plurality of line-angle-specific control sets for transition states - transition state control sets (38) - are held available in a database (28),
wherein the conducting state control sets (32) in each case provide for the activation of precisely one upper semiconductor switch (T1-T6) and precisely one lower semiconductor switch (T1-T6) of the inverter (16),
wherein the transition state control sets (38) in each case provide for the activation of precisely two upper or lower semiconductor switches (T1-T6) and the activation of precisely one lower or upper semiconductor switch (T1-T6), respectively, of the inverter (16),
wherein the conducting state control sets (32) and the transition state control sets (38) define sectors (34) which succeed one another in alternation and at least partially overlapping in a respective direction of rotation of the space vector (30),
wherein the determined line angle (ϕ) is used to determine a conducting state or transition state control set (32, 38) associated with the respective line angle (ϕ) in the database (28) as a basis for control signals (20) for gate control of the semiconductor switches (T1-T6),
wherein during the transition from a conducting state control set (32) to a transition state control set (38) a new gate control of the semiconductor switches (T1-T6) takes place in accordance with the control signals (20) resulting on account of the respective transition state control set (38),
wherein the input voltages of the inverter (16) are monitored during the validity of a transition state control set (38) and when a predefined or predefinable condition in relation to the monitored input voltages is reached, the next-following conducting state control set (32) in the respective direction of rotation of the space vector (30) is selected and a new gate control of the semiconductor switches (T1-T6) takes place together with a commutation in accordance with the control signals (20) resulting on account of said conducting state control set (32), and
wherein a preceding sector (34), starting from the respective line angle (ϕ) in the direction of rotation of the space vector (30), the underlying control set (32) of which sector (34) has already been used as a basis for control signals (20), is blocked.

2. Method according to claim 1, wherein a switchover to the next-following conducting state control set (32) in the respective direction of rotation of the space vector (30) is made at the latest at the end of the period of validity of a transition state control set (38).

3. Method according to claim 1 or 2, wherein the monitored input voltages are checked for equality as a condition in relation to the monitored input voltages.

4. Method according to one of the preceding claims, wherein the database (28) comprises at least twelve control sets (32,38), specifically six conducting state control sets (32) and six transition state control sets (38).

5. Method according to one of the preceding claims, wherein a width of the transition states, and consequently a range of validity of the transition state control sets (38), is defined by means of a predefined or predefinable aperture angle (ϕᵥ).

6. Method according to one of the preceding claims, wherein a control set which provides for the deactivation of all upper and lower semiconductor switches (T1-T6) of the inverter (16) is defined and held available in the database (28), said control set being used during the synchronization to the power supply network or in the event of a fault.

7. Computer program having program code means for the purpose of performing all steps of any one of claims 1 to 6 when the computer program is executed as a control program (28) on an inverter control device (18) of a drive control unit (10).

8. Inverter control device (18) having a processing unit (24) and a memory (26) into which a computer program according to claim 7 is loaded as control program (28) and is executed by the processing unit (24) of the inverter control device (18) during the operation of the latter.

9. Drive control unit (10) having an inverter control device (18) according to claim 8.

## Revendications

1. Procédé pour faire fonctionner un onduleur (16) triphasé, comprenant un interrupteur (T1 à T6) à semi-conducteur pouvant être commandé, notamment pour faire fonctionner un onduleur (16) compris dans une unité (10) de commande d'entraînement,
dans lequel, en mesurant les tensions d'entrée appliquées à l'onduleur (16), on détermine un angle (ϕ) de réseau respectif et on utilise l'angle (ϕ) de réseau pour déterminer une position d'un vecteur (30) d'espace tournant,
dans lequel on conserve, dans une base (28) de données, une pluralité de jeux de commande spécifiques au réseau pour des états directeurs - jeux (32) de commande d'état directeur - et une pluralité de jeux de commande spécifiques à l'angle de réseau pour des états de transition - jeux (38) de commande d'état de transition -,
dans lequel les jeux (32) de commande d'état directeur prévoient chacun l'activation exactement d'un interrupteur (T1 à T6) à semi-conducteur supérieur et exactement d'un interrupteur (T1 à T6) semi-conducteur inférieur de l'onduleur (16),
dans lequel les jeux (38) de commande d'état de transition prévoient chacun l'activation d'exactement deux interrupteurs (T1 à T6) à semi-conducteur supérieurs ou inférieurs et l'activation d'exactement un interrupteur (T1 à T6) à semi-conducteur inférieur ou supérieur de l'onduleur (16),
dans lequel les jeux (32) de commande d'état directeur et les jeux (38) de commande d'état de transition définissent des secteurs (34), qui, dans un sens de rotation respective du vecteur (30) d'espace, se suivent en alternance et se chevauchent au moins en partie l'un l'autre,
dans lequel, par l'angle (ϕ) de réseau déterminé, on détermine, dans la base (28) de données, un jeu (32, 38) de commande d'état directeur ou d'état de transition appartenant à l'angle (ϕ) de réseau respectif, comme base pour des signaux (20) d'excitation des interrupteurs (T1 à T6) à semi-conducteur,
dans lequel, au passage d'un jeu (32) de commande d'état directeur à un jeu (38) de commande d'état de transition, se produit une excitation nouvelle des interrupteurs (T1 à T6) à semi-conducteur correspondant aux signaux (20) d'excitation provenant du jeu (38) de commande d'état de transition respectif,
dans lequel, pendant la validité d'un jeu (38) de commande d'état de transition, on contrôle les tensions d'entrée de l'onduleur (16) et, lorsque est atteinte une condition donnée à l'avance ou pouvant l'être se rapportant aux tensions d'entrée contrôlées, on sélectionne le jeu (32) de commande d'état directeur venant immédiatement ensuite dans le sens de rotation respectif du vecteur (30) d'espace et il se produit une excitation nouvelle des interrupteurs (T1 à T6) à semi-conducteur ainsi qu'une commutation correspondant aux signaux (20) d'excitation provenant de cet état (32) de commande d'état directeur et
dans lequel on bloque un secteur (34), qui revient dans le sens de rotation de vecteur (30) d'espace, à partir de l'angle (ϕ) de réseau respectif et dont le jeu (32) de commande à la base a déjà été utilisé comme base pour des signaux (20) d'excitation.

2. Procédé suivant la revendication 1, dans lequel, au plus tard à la fin de la durée de validité d'un jeu (38) de commande d'état de transition, on passe au jeu (32) de commande d'état directeur venant immédiatement ensuite dans le sens de rotation respectif du vecteur (30) d'espace.

3. Procédé suivant la revendication 1 ou 2, dans lequel on contrôle, comme condition se rapportant aux tensions d'entrée contrôlée, l'égalité des tensions d'entrée contrôlées.

4. Procédé suivant l'une des revendications précédentes, dans lequel la base (28) de données comprend au moins douze jeux (32, 38) de commande et de fait six jeux (32) de commande d'état directeur et six jeux (38) de commande d'état de transition.

5. Procédé suivant l'une des revendications précédentes, dans lequel on définit, par un angle (ϕᵥ) d'ouverture donné à l'avance ou pouvant l'être, une largeur des états de transition et ainsi une plage de validité des jeux (38) de commande d'état de transition.

6. Procédé suivant l'une des revendications précédentes, dans lequel on définit et on conserve, dans la base (28) de données, un jeu de commande, qui prévoit la désactivation de tous les interrupteurs (T1 à T6) à semi-conducteur supérieurs et inférieurs de l'onduleur (16), ce jeu de commande étant utilisé lors de la synchronisation au réseau ou en cas de défaillance.

7. Programme d'ordinateur ayant des moyens de code de programme pour effectuer tous les stades de l'une quelconque des revendications 1 à 6 lorsque le programme d'ordinateur est exécuté comme programme (28) de commande sur un dispositif (18) de commande d'onduleur d'une unité (10) de commande d'entraînement.

8. Dispositif (18) de commande d'onduleur, comprenant une unité (24) de traitement et une mémoire (26), dans laquelle il est chargé, comme programme (28) de commande, un programme d'ordinateur suivant la revendication 7, qui, lorsque le dispositif (18) de commande de l'onduleur fonctionne, est réalisé par son unité (24) de traitement.

9. Unité (10) de commande d'entraînement, comprenant un dispositif (18) de commande d'onduleur suivant la revendication 8.
